# EUROPEAN PATENT SPECIFICATION

(11) **EP 3 348 908 B1**
(45) Date of publication and mention of the grant of the patent: **05.02.2020**
(21) Application number: 17206501.3
(22) Date of filing: 11.12.2017
(51) Int. Cl.: F23R 3/14, F23R 3/30, F23R 3/20, F23R 3/28, F23D 11/38, F23D 11/10

(54) **GAS TURBINE FUEL INJECTOR**
GASTURBINENKRAFTSTOFFEINSPRITZER
INJECTEUR DE CARBURANT DE TURBINE À GAZ

(30) Priority: 11.01.2017 GB 201700459; 11.01.2017 GB 201700465; 29.03.2017 GB 201705002
(43) Date of publication of application: 18.07.2018
(73) Proprietor: Rolls-Royce plc, London SW1E 6AT (GB)
(72) Inventor: Caruso, Mike, Derby, Derbyshire DE24 8BJ (GB); Witham, Frederic, Derby, Derbyshire DE24 8BJ (GB); Gregory, Jonathan, Derby, Derbyshire DE24 8BJ (GB); Ballantyne, Steven, Derby, Derbyshire DE24 8BJ (GB); Montgomery, James, Derby, Derbyshire DE24 8BJ (GB)
(74) Representative: Rolls-Royce plc

(56) References cited:
- EP-A1- 3 115 692
- DE-A1-102013 208 069
- US-B1- 6 543 235

## Description

The present invention concerns fuel injectors used for providing fuel to the combustion chamber of a gas turbine engine. More particularly, the fuel injector is of a jet-in-crossflow type. The document EP 3 115 692 A1, which represents prior art under Article 54(3) EPC, discloses a fuel injector having a jet-in-crossflow arrangement.

US 6 543 235 B1 discloses a fuel injector comprising: one or more elongate fuel passages having an elongate axis extending from an upstream inlet end to a downstream outlet end; one or more outlets at the outlet end extending obliquely with respect to the elongate axis; the elongate fuel passage defined by an inner skin of a double skinned pipe, the double skinned pipe defining a first annular cavity between the inner skin and an outer skin.

In a gas turbine engine, fuel is mixed with air prior to delivery into a combustion chamber where the mixture is ignited. Arrangements for mixing the fuel and air vary. In prefilming arrangements, fuel is formed in a film along a prefilmer surface adjacent to a nozzle. Pressurised, turbulent air streams are directed against the prefilmer surface and serve to shear fuel from the surface and mix the sheared fuel into the turbulent air streams. In vaporiser designs fuel is forced through a small orifice into a more cavernous air filled chamber. The sudden pressure drop and acceleration of the fuel flow upon entering the chamber disperses the fuel into a spray. High temperatures subsequently vaporise the fuel. Turbulent air flows in the chamber again encourage mixing.

Both methods have associated advantages and disadvantages. Prefilming fuel injectors have highly complex and intricate designs that are expensive to manufacture. Design iterations are slow, due to complexity of the manufacturing process. Whilst relatively simple in design and generally cheaper in manufacture, vaporiser fuel injectors provide inferior fuel preparation when compared to prefilming fuel injectors thereby resulting in inferior engine performance.

Jet in crossflow is an air blast technique wherein the energy for atomisation is primarily provided by an airstream encountered by a fuel jet. The fuel is rapidly distributed over a range of radii, giving an opportunity for improved fuel/air mixing; and the mechanical design of the injector is simpler, permitting a reduction in manufacturing cost. A fuel passage is arranged centrally of an annular air swirler. Air flows generally from upstream to downstream in a direction substantially parallel with the fuel passage. The swirler imparts a spin on the air such that it spirals through the air swirler. One or more outlets of the fuel passage are arranged inclined to the flow direction of swirled air passing the outlet. The outlet is configured to deliver the fuel as a jet which crosses the swirled air flow. Walls of the swirler passages in the air swirler may be radially convergent in a manner which directs the exiting air flow towards the fuel passage outlet to encourage mixing of the fuel and air in the outlet chamber and minimise filming of fuel on walls of the air swirler. The radially convergent passages accelerate the airflow providing more kinetic energy to act upon the fuel and improve atomisation. The configuration ensures maximal atomisation of the fuel as it joins the relatively high velocity air stream.

In accordance with the invention there is provided a fuel injector according to claim 1.

Optionally the bridge is further supported by an axially extending support beam, the axially extending support beam extending axially from the centre of the bridge and in line with the elongate axis. An opposite end of the support beam may be joined with a wall of the fuel passage which extends substantially orthogonally to the elongate axis. The support beam may have an aerodynamic cross-section shape.

The arms of the bridge may extend both radially and axially, that is, they are not orthogonal to the elongate axis. The arms may form an apex at the centre, the apex being a point on the elongate access and in axial alignment with a centre of the nose. Alternatively, the arms may meet at a planar apex on the centre.

The fuel injector may further comprise a second annular cavity defined by an annular outer wall extending from downstream of the outlet end to a position upstream of the one or more outlets, the annular outer wall being convergent at a downstream end whereby to define an orifice centred nominally coincident with the elongate axis, the second annular cavity having a second annular cavity inlet at an upstream end and wherein the fuel passage outlets emerge at a radially outer surface of the annular outer wall.

The inner and outer skin may meet adjacently upstream of the one or more outlets.

In use, a stream of non-swirling air enters the second annular cavity inlet, passes over the fuel passage and exits at the orifice. The convergent end of the annular outer wall turns the annular air flow into a single jet of air.

Preferably the fuel passage has a plurality of outlets. The outlets are arranged obliquely with respect to the elongate axis and are directed radially outwards and in a downstream direction. The outlets may be inclined in a circumferential and/or axial direction. The plurality of outlets may be arranged in an annular array nominally centred on the elongate axis. The plurality of outlets may be equally spaced from each other. For example, the plurality of outlets may comprise 5 to 15, or more particularly 7 to 11 equally spaced outlets arranged in an annular array. The outlets may sit between adjacent arms of the bridge. Optionally the arms of the bridge are shaped to guide flow of fuel efficiently from the elongate fuel passage towards the outlets.

The annular outer wall may comprise an array of slots arranged to receive an array of fuel passage outlets. For example, the slots may extend in-line with the elongate axis. Alternatively, the annular outer wall may comprise an array of holes through which the outlets may be arranged to protrude. The annular outer wall may form part of an annular air swirler which surrounds the fuel passage.

Multiple fuel passages may be arranged, in use, to provide staged fuel staging within the injector.

The nose section may extend downstream of the fuel passage outlets. The nose section may be convergent towards the downstream end. For example the nose portion is cone shaped. The end of the nose portion may be arranged slightly upstream of the orifice.

In use, the fuel injector may be arranged nominally centrally of an annular air swirler to form a fuel spray nozzle. The annular air swirler may optionally be attached to the fuel injector, alternatively the air swirler is supported by a separate component such that it floats around the fuel injector. In such a configuration a spherical section may be incorporated into the outer surface of the injector where it interfaces with a cylindrical section of the air swirler or seal in order to accommodate axial and angular moevment of the injector relative to the air swirler or seal. Radial displacement may be accomodated by a floating seal arrangement.

Such a fuel spray nozzle may comprise a component of a gas turbine engine. Optionally the fuel spray nozzle is one of a plurality of fuel injectors in the gas turbine engine. A plurality of fuel spray nozzles may be arranged in an annular array around an engine axis of a gas turbine engine.

Some embodiments of the invention will now be further described with reference to the accompanying Figures in which;
Figure 1 shows the general arrangement of a fuel spray nozzle within a gas turbine engine as is known in the prior art;
Figure 2 shows in more detail an example of a jet in crossflow fuel spray nozzle arrangement known in the prior art;
Figure 3 shows, in section, a fuel injector previously described in UK patent application no. GB1700465.6;
Figure 4 shows a more detailed view of the fuel spray nozzle of Figure 3;
Figure 5 shows an end view of a fuel spray nozzle previously described in UK patent application no. GB1700465.6;
Figure 6 shows a gas turbine engine into which fuel spray nozzles in accordance with the invention might usefully be used;
Figure 7 shows an example of an air swirler configuration suitable for use in a fuel spray nozzle in accordance with the invention;
Figure 8 shows a first sectional view of a first embodiment of a fuel spray nozzle in accordance with an embodiment of the invention taken along an axis of the fuel passage;
Figure 9 shows a second sectional view of a fuel spray nozzle in accordance with an embodiment of the invention taken along the line A-A of Figure 8;
Figure 10 shows a sectional view a second embodiment of a fuel spray nozzle in accordance with an embodiment of the invention taken through the fuel passage and including a support beam;
Figure 11 shows a sectional view a third embodiment of a fuel spray nozzle in accordance with an embodiment of the invention taken along an axis of the fuel passage.

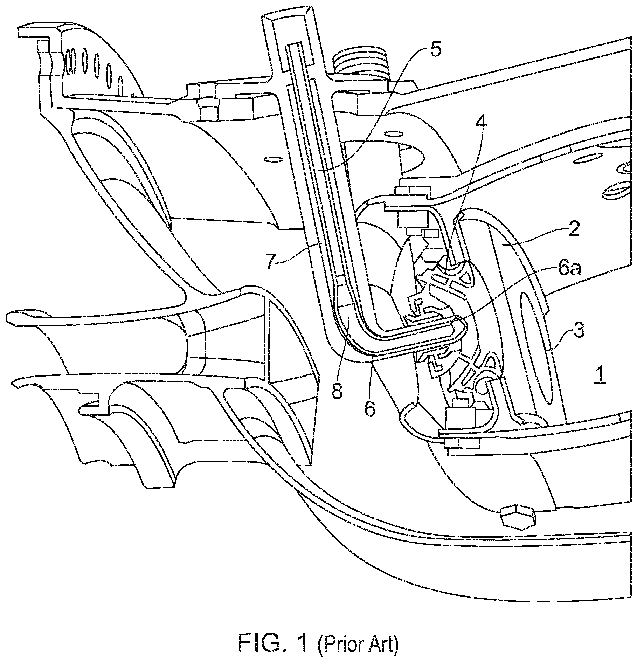

Figure 1 shows the general arrangement of a fuel nozzle within a gas turbine engine. At an upstream end of a combustor 1 is an annular combustor heatshield 2 in which is provided an annular array of holes 3 through which a mix of fuel and air is delivered to the combustor 1. Mounted to an upstream facing wall of the combustor heatshield 2 is an annular air swirler 4. A fuel feed arm 5 carries a fuel injector 6 which delivers air to the centre of an air swirler 4 through an outlet 6a. The feed arm 5 and injector 6 have a double skinned wall which defines an annular cavity 7 around the fuel line 8. This air filled cavity 7 serves as a heatshield for the fuel line 8.

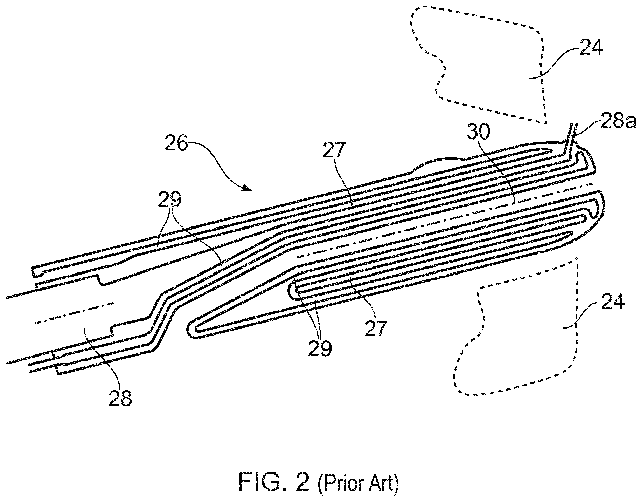

Figure 2 shows in more detail a known arrangement of fuel spray nozzle. The arrangement is an example of a jet-in-crossflow fuel spray nozzle as disclosed in EP 3 115 692 A1. A fuel injector 26 has a centrally arranged fuel line 28 which, as it approaches a downstream end of the injector 26, forms an annular fuel passage 27 having an outlet 28a. Typically the outlet 28a is one of a plurality of outlets arranged in an annular array. An annular air filled cavity 29 provides a heatshield on radially inner and radially outer walls of the annular fuel passage 27. A central channel 30 open to the downstream end serves as a conduit for a central jet of air. An annular air swirler 24 (shown in outline only) typically mounted to the combustor (not shown) sits around the injector 26.

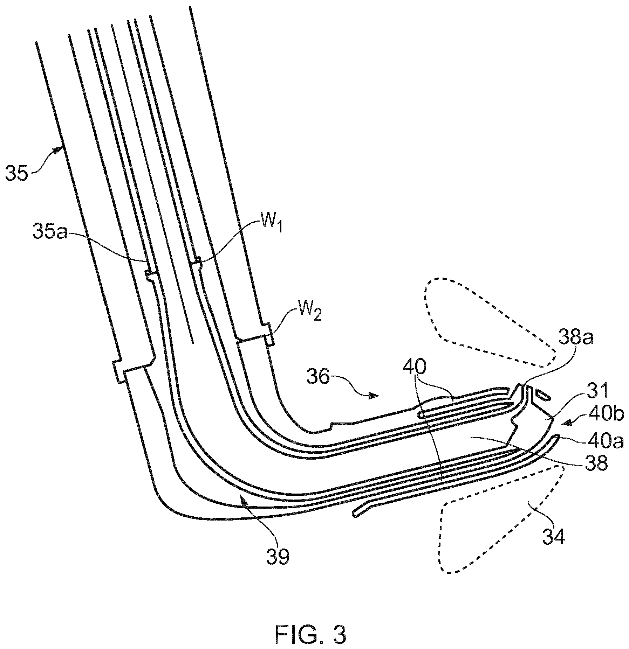

Figure 3 shows a fuel injector 36 as previously described in UK patent application no. GB1700465.6. The fuel injector 36 has a centrally arranged fuel passage 38. At its downstream end, the fuel passage fans out to provide an annular array of outlets 38a. An annular air filled cavity 39 serves as a heatshield for the centrally arranged fuel passage 38. Towards the outlet end of the injector an open ended annular cavity 40 is provided around the annular heatshield cavity 39. An outer wall 40a of the cavity 40 is shaped to turn an airflow passing through the channel into a single jet leaving an outlet 40b which is arranged centrally of the annular array of outlets 38a. A cone shaped nose 31 of the fuel injector projects towards the outlet 40b to assist in directing air from the open ended annular cavity towards the outlet 40b where it is shaped to form a single jet.

An annular air swirler 34 (shown in outline only) typically mounted to the combustor (not shown) sits around the injector 26. The injector 36 is joined to a double skinned fuel feed tube 35, 35a by welds W₁ and W₂.

In use fuel is delivered through fuel passage 38 and exits through outlets 38a. The outlets 38a are directed so as to project fuel across an air flow path which passes over the outer wall 40a and through air swirler 34. Annular heatshield cavity 39 is closed at the injector outlet end and contains air to insulate the fuel passage 38. In contrast, annular cavity 40 is open at the injector outlet end and a continuous stream of air is channelled through this annular cavity 40 and out through the air outlet 40b which sits just downstream of the cone shaped nose 31. The converging outer wall 40a of cavity 40 and the cone shaped nose 31 together create a single jet of air at the outlet 40b. The outer wall 40a includes an array of holes 40c which encircle protruding fuel outlets 38a. Some air from the annular cavity 40 thus exits through these holes 40c insulating the outlets 38a and providing an air film that may prevent the build-up of fuel in this region reducing the incidence of local coke formation.

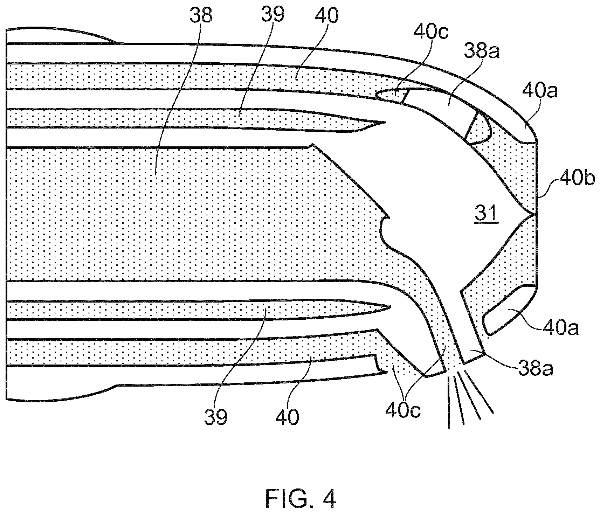

Figure 4 shows a more detailed view of the fuel injector of Figure 3. The same reference numerals are used to identify the same components.

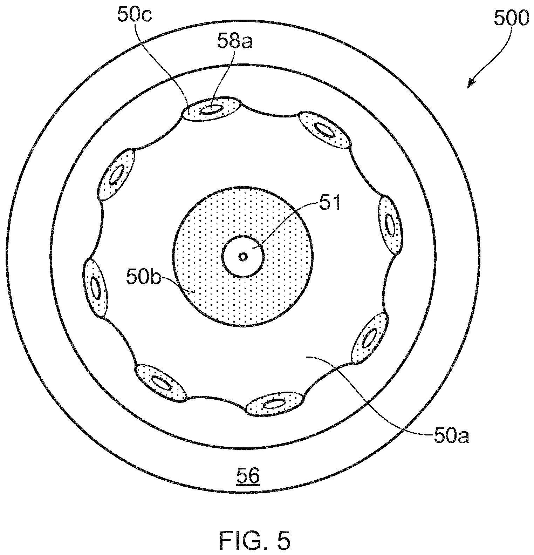

Figure 5 shows an end view of the fuel injector 500 in accordance with an embodiment of the invention. As can be seen, a centrally arranged cone shaped nose 51 is surrounded by a converging outer wall portion 50a which borders an outlet 50b though which an air stream exits. An annular array of fuel injector outlets 58a surrounds the cone shaped nose 51. Each outlet 58a protrudes through a hole in outer wall 50a. Each hole 58a defines an outlet 50c through which a portion of the air from the air stream exits. An annular air swirler 59 surrounds the injector.

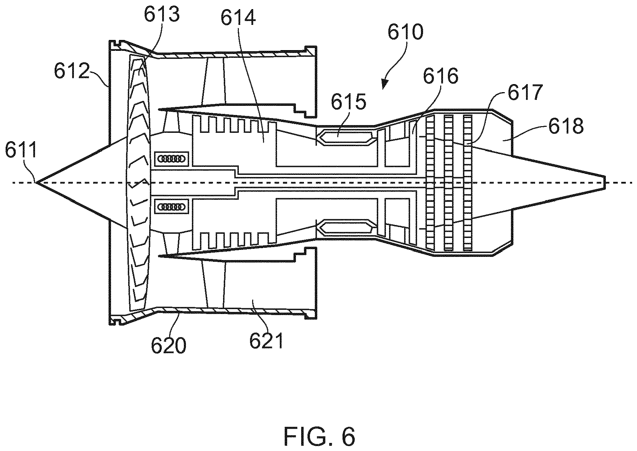

Figure 6 illustrates a gas turbine engine into which fuel injectors in accordance with the invention might usefully be used. With reference to Figure 6, a gas turbine engine is generally indicated at 610, having a principal and rotational axis 611. The engine 610 comprises, in axial flow series, an air intake 612, a propulsive fan 613, a high-pressure compressor 614, combustion equipment 615, a high-pressure turbine 616, a low-pressure turbine 617 and an exhaust nozzle 618. A nacelle 620 generally surrounds the engine 610 and defines the intake 612.

The gas turbine engine 610 works in the conventional manner so that air entering the intake 612 is accelerated by the fan 613 to produce two air flows: a first air flow into the high-pressure compressor 614 and a second air flow which passes through a bypass duct 621 to provide propulsive thrust. The high-pressure compressor 614 compresses the air flow directed into it before delivering that air to the combustion equipment 615.

In the combustion equipment 615 the air flow is mixed with fuel and the mixture combusted. The resultant hot combustion products then expand through, and thereby drive the high and low-pressure turbines 616, 617 before being exhausted through the nozzle 18 to provide additional propulsive thrust. The high 616 and low 617 pressure turbines drive respectively the high pressure compressor 614 and the fan 613, each by suitable interconnecting shaft. An array of fuel injectors in accordance with the invention may conveniently be provided at an inlet end of the combustion equipment 615.

Other gas turbine engines to which the present disclosure may be applied may have alternative configurations. By way of example such engines may have an alternative number of interconnecting shafts (e.g. three) and/or an alternative number of compressors and/or turbines. Further the engine may comprise a gearbox provided in the drive train from a turbine to a compressor and/or fan.

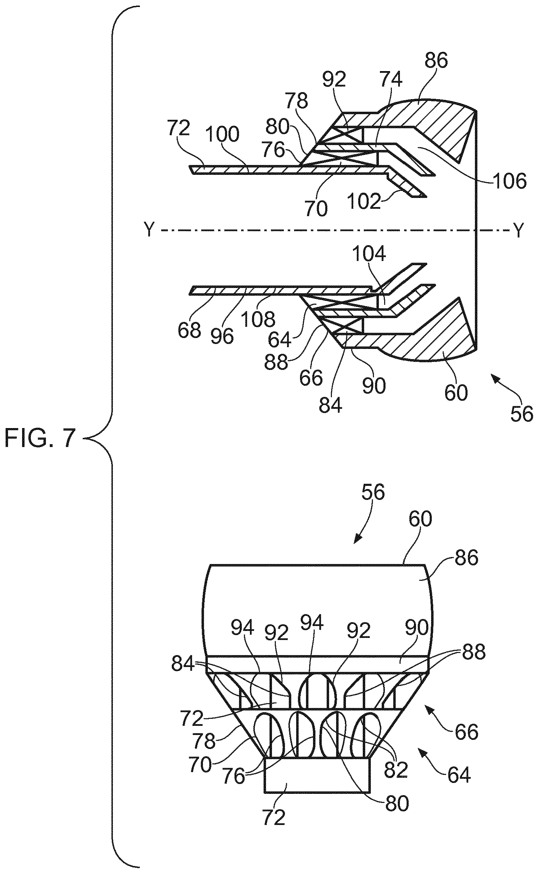

Figure 7 shows an air swirler 56 suitable for use in a fuel spray nozzle in accordance with the invention. The swirler has an axis Y and comprises a first swirler section 64, a second swirler section 66 and an additional swirler section 68. The first swirler section 64 comprises a plurality of vanes 70, a first member 72 and a second member 74. The second member 74 is arranged coaxially around the first member 72 and the vanes 70 extend radially between the first and second members 72 and 74. The vanes 70 have leading edges 76 and the second member 74 has an upstream end 78. The leading edges 76 of the vanes 70 extend with radial and axial components from the first member 72 to the upstream end 78 of the second member 74 and the radially outer ends 80 of the leading edges 76 of the vanes 70 form arches 82 with the upstream end 78 of the second member 74. In particular the leading edges 76 of the vanes 70 extend with axial downstream components from the first member 72 to the upstream end 78 of the second member 74.

The second swirler portion 66 comprises a plurality of vanes 84 and a third member 86. The third member 86 is arranged coaxially around the second member 74. The vanes 84 of the second swirler 66 extend radially between the second and third members 74 and 86. The vanes 84 of the second swirler portion 66 have leading edges 88 and the third member 86 has an upstream end 90. The leading edges 88 of the vanes 84 of the second swirler portion 66 extend with radial and axial components from the upstream end 78 of the second member 74 to the upstream end 90 of the third member 86 and the radially outer ends 92 of the leading edges 88 of the vanes 84 of the second swirler portion 66 form arches 94 with the upstream end 90 of the third member 86. In particular the leading edges 88 of the vanes 84 extend with axial downstream components from the upstream end 78 of the second member 74 to the upstream end 90 of the third member 86.

The first member 72, the second member 74 and the third member 86 are generally annular members with a common axis Y. Thus, the upstream end of the first member 72 is upstream of the upstream end 78 of the second member 74 and the upstream end 78 of the second member 74 is upstream of the upstream end 90 of the third member 86.

The outer surface of the downstream end of the first member 72 tapers/converges towards the axis Y of the fuel injector head 60. The first member 72 The downstream end of the second member 74 tapers/converges towards the axis Y of the fuel injector head 60 and the inner surface of the downstream end of the third member 86 initially tapers/converges towards the axis Y of the fuel injector head 60 and then diverges away from the axis Y of the fuel injector head 60. An annular passage 104 is defined between the first member 72 and the second member 74 and an annular passage 106 is defined between the second member 74 and the third member 86. A central passage 108 is defined within the first member 74 in which a fuel passage is received in accordance with the invention.

It is seen that the fuel injector head 60 is arranged such that the leading edges 76 and 88 of the vanes 70 and 84 respectively are arranged to extend with axial downstream components from the first member 72 to the upstream end 78 of the second member 74 and from the second member 74 to the upstream end 90 of the third member 86 respectively. In addition it is seen that the fuel injector head 60 is arranged such that the radially outer ends 80 and 92 of the leading edges 76 and 88 of the vanes 70 and 84 respectively form arches 82 and 94 with the upstream ends 78 and 90 of the second and third member 74 and 86 respectively. These features enable the fuel injector head 60 and in particular the first and second swirler sections 64 and 66 of the fuel injector head 60 to be manufactured by direct laser deposition. These features enable the vanes 70 of the first swirler 64 to provide support between the first member 72 and the second member 74 and the vanes 84 of the second swirler 66 to provide support between the second member 74 and the third member 86 during the direct laser deposition process.

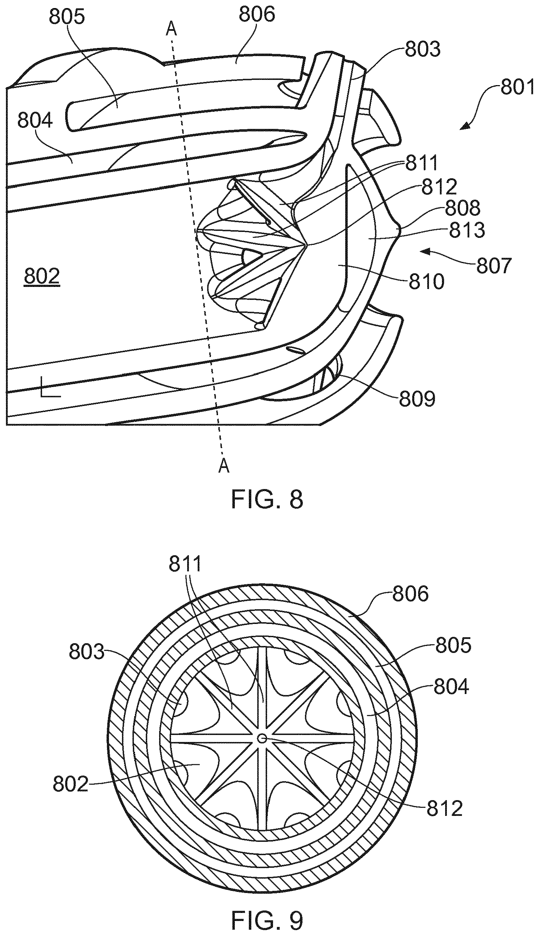

Figure 8 shows a section through a fuel injector 801 which shares many features in common with that shown in Figures 3 and 4. The fuel injector 801 has a centrally arranged fuel passage 802. At its downstream end, the fuel passage fans out to provide an annular array of outlets 803. An annular air filled cavity 804 serves as a heatshield for the centrally arranged fuel passage 802. Towards the outlet end of the injector an open ended annular cavity 805 is provided around the annular heatshield cavity 804. An outer wall 806 of the cavity 805 is shaped to turn an airflow passing through the channel into a single jet leaving an outlet 807 which is arranged centrally of the annular array of outlets 803. A cone shaped nose 808 of the fuel injector projects towards the outlet 807 to assist in directing air from the open ended annular cavity towards the outlet 807 where it is shaped to form a single jet.

In use fuel is delivered through fuel passage 802 and exits through outlets 803. The outlets 803 are directed so as to project fuel across an air flow path which passes over the outer wall 806 and through an air swirler (not shown). Annular heatshield cavity 804 optionally extends past the fuel outlets through a plurality of circumferentially disconnected passages to a tip 813 . The cavity 804 is closed at the injector downstream tip by the nose 808. The cavity 804 contains air to insulate the fuel passage 802 from air that surrounds it. In particular, the cavity 804 at the tip 813 shields the fuel gallery from heat that is transmitted via radiation from the combustion zone (not shown) towards the nose 808. The sizes of the passages that pass between the fuel outlets 803 and connect with the tip 813 part of the cavity 804 may optionally be sized so as to allow solid material to escape from the tip part (813) of the cavity during/after manufacture of the component. For example, if the component were manufactured via additive methods, these passages may be sized to be greater than 0.3 mm in their smallest dimension in order to allow metal powder used in the additive manufacture to drain out of the tip part 813 of the cavity 804.

In contrast, annular cavity 805 is open at the injector outlet end and a continuous stream of air is channelled through this annular cavity 805 and out through the air outlet 807 which sits just downstream of the cone shaped nose 808. The converging outer wall 806 of channel 805 and the cone shaped nose 808 together create a single jet of air at the outlet 807. The outer wall 806 includes an array of holes 809 which encircle protruding fuel outlets 803. Some air from the annular cavity 805 thus exits through these holes 809 insulating the outlets 803 and providing an air film that may prevent the build-up of fuel in this region reducing the incidence of local coke formation. These holes 809 may optionally be sized to provide annular jets of air which help to shield the fuel jets from the air passing in crossflow and thereby cause the jets to penetrate further across the air stream.

Behind the nose 808 is a bridge 810 which spans the fuel passage 802. The bridge comprises an array of radially extending arms 811 which meet at an apex 812 which sits in axial alignment with and apex of the nose cone 808. The bridge arms 811 are optionally shaped such that they converge at angles of from about 45° to about 65° to the injector axis. This may address a compromise between a requirements for manufacturability when constructed by additive methods, and minimising the size of a stagnant fuel zone (which can lead to coking) created in a local saddle at the convergence of the bridges 811 to apex 812.

Figure 9 shows the embodiment of Figure 8 in a section taken through the line A-A.

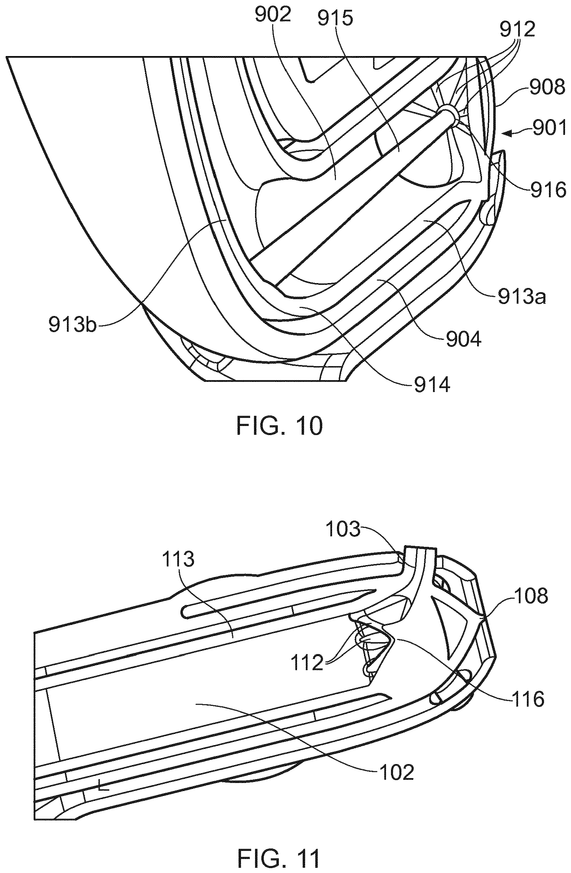

Figure 10 shows an alternative embodiment of a fuel injector in accordance with the invention. The main difference to the fuel injector of Figure 8 is in the configuration of the bridge. As can be seen the bridge 912, 916 sits just upstream from the nose 908 and outlet 901. The bridge comprises an array of radially extending arms 912 extending from a centre piece 916. An outer wall 913a, 913b of the fuel passage 902 includes a bend 914 such that portions 913a and 913b of the wall either side of the bend 914 are arranged substantially orthogonally with one another. A support beam 915 extends between the centre 916 and wall portion 913b substantially in parallel with wall portion 913a. The support beam 915 may be provided with an aerodynamically shaped cross section.

The support beam 915 need not be extended all the way to the opposite end of the injector. Desirably it extends sufficiently far away from the outlets to provide that any wakes created as fuel flows around the support beam 915 are insignificant by the time the fluid enters the outlets. Beyond this distance, it could be shaped to meet any wall of the fuel gallery.

By providing the beam 915 to support the centre 916, the angle of the radially extending arms 912 to the axis of the fuel pasage where they meet the centre 916 can be increased to around 90°. This can simplfy manufacturability of the injector, and may eliminate the aforementioned saddle in which stagnant fuel can reside and any consequent occurrence of coking.

Figure 11 shows another alternative embodiment of a fuel injector in accordance with the invention. The main difference to the fuel injectors of Figures 8 and 9 is in the configuration of the bridge. As can be seen the bridge 112, 116 sits just upstream of the nose 108 in fuel passage 102. The bridge comprises radially extending arms 112 which span the distance from the centre 116 to the wall of the fuel passage 102. It will be noted that in contrast to the bridge of Figure 8, the centre 116 is formed as a planar disc section rather than an apex 812.

For any embodiments, the arms 811; 912; 112 of the bridge need not extend only in a radial direction. For example, the arms 811; 912; 112 may also extend axially forming a cone-like bridge structure. In another example, the arms 811; 912; 112 may include curvature forming a dome-like bridge structure. Optionally the arms 811; 912; 112 may have a circumferential component. The arms 811; 912; 112 may be arranged to generate different flow effective areas to the fuel outlet jets, so as to generate differences in the fuel flow through in different fuel jets.

In a fuel flow direction, the arms may be shaped aerodynamically to encourage efficient flow of the fuel towards the outlets 803;103. Similarly, spaced between the arms, the inner wall 113 may be profiled to guide fuel towards the outlets 803; 103 in an efficient manner. The number of arms 811; 912; 112 may equal the number of outlets 803; 103, the outlets being arranged circumferentially between adjacent arms 811; 912; 112.

The described bridge configurations may be conveniently manufactured using additive manufacturing techniques. For example, the bridge configurations may be manufactured using direct laser deposition (DLD). The bridge may be integrally formed with the injector nozzle.

The skilled person will appreciate that except where mutually exclusive, a feature described in relation to any one of the above aspects of the invention may be applied mutatis mutandis to any other aspect of the invention.

It will be understood that the invention is not limited to the embodiments above-described and various modifications and improvements can be made without departing from the concepts described herein. Except where mutually exclusive, any of the features may be employed separately or in combination with any other features within the scope of the invention as defined in the appended claims.

## Claims

1. A fuel injector comprising;
one or more elongate fuel passages (802) having an elongate axis extending from an upstream inlet end to a downstream outlet end;
one or more outlets (803) at the outlet end extending obliquely with respect to the elongate axis;
the elongate fuel passage defined by an inner skin of a double skinned pipe, the double skinned pipe defining a first annular cavity (804) between the inner skin and outer skin;
the inner skin and the outer skin converging adjacent the one or more outlets (803) to form a nose (808);
a bridge arranged within the fuel passage (802) and upstream of the nose (808), the bridge comprising a plurality of arms (811) extending radially from a centre (812, 116, 916) to a wall of the fuel passage, the centre (812, 116, 916) arranged in axial alignment with a centre of the nose (808).

2. A fuel injector as claimed in claim 1 further comprising a second annular cavity (805) provided around the first annular cavity 804 and defined by an annular outer wall (806) extending from downstream of the outlet end to a position upstream of the one or more outlets (803), the annular outer wall (806) being convergent at a downstream end whereby to define an orifice (807) centred nominally coincident with the elongate axis, the second annular cavity (805) having a second annular cavity inlet at an upstream end and wherein the fuel passage outlets (803) emerge at a radially outer surface of the annular outer wall (806).

3. A fuel injector as claimed in claim 2 wherein the outlets (803) are directed radially outwards and in a downstream direction.

4. A fuel injector as claimed in claim 2 or claim 3 wherein the outlets (803) are inclined in a circumferential and/or axial direction.

5. A fuel injector as claimed in any preceding claim wherein the nose extends downstream of the fuel passage outlets.

6. A fuel injector as claimed in any of claims 2 to 5 wherein the end of the nose (808) is arranged slightly upstream of the orifice (807).

7. A fuel injector as claimed in any preceding claim wherein the bridge further comprises a support beam (915) extending from the centre (812, 116, 916) to an upstream position, where it is attached to a wall of the fuel passage.

8. A fuel injector as claimed in any of claims 1 to 6 wherein the arms (811) of the bridge converge towards an apex at the centre (812, 116, 916).

9. A fuel injector as claimed in any of claims 1 to 7 wherein the arms (112) converge towards a planar portion at the centre (812, 116, 916)

10. A fuel injector as claimed in any preceding claim wherein a longitudinal axis of the arms (112) is inclined to the orthogonal to the elongate axis of the fuel passage (102).

11. A fuel injector as claimed in claim 10 wherein the arms (112) are curved to form a dome-shaped bridge structure.

12. A fuel spray nozzle comprising an annular air swirler and a fuel injector as claimed in any preceding claim wherein the fuel injector is arranged nominally centrally of the annular air swirler (34) to form the fuel spray nozzle.

13. A gas turbine engine comprising one or more fuel spray nozzles, the fuel spray nozzles having the configuration as claimed in claim 12.

14. A gas turbine engine as claimed in claim 13 comprising a plurality of fuel spray nozzles arranged in an annular array around an engine axis of the gas turbine engine.

## Patentansprüche

1. Kraftstoffeinspritzventil, das umfasst;
eine oder mehrere längliche Kraftstoffdurchführungen (802) mit einer länglichen Achse, die sich von einem stromaufwärts gelegenen Einlassende zu einem stromabwärts gelegenen Auslassende erstreckt;
einen oder mehrere Auslässe (803) an dem Auslassende, die sich in Bezug auf die längliche Achse schräg erstrecken;
die durch eine Innenschale eines doppelschaligen Rohrs definierte längliche Kraftstoffdurchführung, wobei das doppelschalige Rohr einen ersten ringförmigen Hohlraum (804) zwischen der Innenschale und Außenschale definiert;
wobei die Innenschale und die Außenschale angrenzend an den einen oder die mehreren Auslässe (803) zusammenlaufen, um eine Nase (808) auszubilden;
eine Brücke, die innerhalb der Kraftstoffdurchführung (802) und stromaufwärts der Nase (808) gelegen angeordnet wird, wobei die Brücke eine Vielzahl von Armen (811) umfasst, die sich radial von einer Mitte (812, 116, 916) zu einer Wand der Kraftstoffdurchführung erstrecken, wobei die Mitte (812, 116, 916) in axialer Ausrichtung mit einer Mitte der Nase (808) angeordnet wird.

2. Kraftstoffeinspritzventil nach Anspruch 1, das des Weiteren einen zweiten ringförmigen Hohlraum (805) umfasst, der um den ersten ringförmigen Hohlraum 804 bereitgestellt und durch eine ringförmige Außenwand (806) definiert wird, die sich stromabwärts des Auslassendes zu einer Position stromaufwärts des einen oder der mehreren Auslässe (803) erstreckt, wobei die ringförmige Außenwand (806) bei einem stromabwärts gelegenen Ende zusammenlaufend ist, um eine nominell zentrierte Öffnung (807) zu definieren, die mit der länglichen Achse übereinstimmt, wobei der zweite ringförmige Hohlraum (805) einen zweiten ringförmigen Hohlraumeinlass an einem stromaufwärts gelegenen Ende aufweist und wobei die Kraftstoffdurchführungsauslässe (803) an einer radialen Außenfläche der ringförmigen Außenwand (806) auftreten.

3. Kraftstoffeinspritzventil nach Anspruch 2, wobei sich die Auslässe (803) radial nach außen und in einer stromabwärts gelegenen Richtung ausgerichtet befinden.

4. Kraftstoffeinspritzventil nach Anspruch 2 oder Anspruch 3, wobei die Auslässe (803) in einer umlaufenden und/oder axialen Richtung geneigt werden.

5. Kraftstoffeinspritzventil nach einem vorhergehenden Anspruch, wobei sich die Nase stromabwärts der Kraftstoffdurchführungsauslässe erstreckt.

6. Kraftstoffeinspritzventil nach einem der Ansprüche 2 bis 5, wobei das Ende der Nase (808) geringfügig stromaufwärts von der Öffnung (807) angeordnet wird.

7. Kraftstoffeinspritzventil nach einem vorhergehenden Anspruch, wobei die Brücke des Weiteren einen Stützträger (915) umfasst, der sich von der Mitte (812, 116, 916) zu einer stromaufwärts gelegenen Position erstreckt, bei der er mit einer Wand der Kraftstoffdurchführung verbunden wird.

8. Kraftstoffeinspritzventil nach einem der Ansprüche 1 bis 6, wobei die Arme (811) der Brücke in Richtung eines Scheitelpunkts bei der Mitte (812, 116, 916) zusammenlaufen.

9. Kraftstoffeinspritzventil nach einem der Ansprüche 1 bis 7, wobei die Arme (112) in Richtung eines ebenen Abschnitts bei der Mitte (812, 116, 916) zusammenlaufen.

10. Kraftstoffeinspritzventil nach einem vorhergehenden Anspruch, wobei eine Längsachse der Arme (112) rechtwinklig zu der länglichen Achse der Kraftstoffdurchführung (102) geneigt wird.

11. Kraftstoffeinspritzventil nach Anspruch 10, wobei die Arme (112) gekrümmt werden, um eine kuppelförmige Brückenstruktur auszubilden.

12. Kraftstoffsprühdüse, die einen ringförmigen Luftdrallgeber und ein Kraftstoffeinspritzventil nach einem vorhergehenden Anspruch umfasst, wobei das Kraftstoffeinspritzventil nominal zentral des ringförmigen Luftdrallgebers (34) angeordnet wird, um die Kraftstoffsprühdüse auszubilden.

13. Gasturbinenmotor, der eine oder mehrere Kraftstoffsprühdüsen umfasst, wobei die Kraftstoffsprühdüsen die Konfiguration nach Anspruch 12 aufweisen.

14. Gasturbinenmotor nach Anspruch 13, der eine Vielzahl von Kraftstoffsprühdüsen umfasst, die in einer ringförmigen Gruppe um eine Motorachse des Gasturbinenmotors herum angeordnet werden.

## Revendications

1. Injecteur de carburant comprenant :
un ou plusieurs passages de carburant allongés (802) possédant un axe allongé s'étendant à partir d'une extrémité d'entrée en amont jusqu'à une extrémité de sortie en aval ;
une ou plusieurs sorties (803) au niveau de l'extrémité de sortie s'étendant obliquement par rapport à l'axe allongé ;
le passage de carburant allongé défini par une peau interne d'un tuyau à double peau, le tuyau à double peau définissant une première cavité annulaire (804) entre la peau interne et la peau externe ;
la peau interne et la peau externe convergeant adjacentes à la ou des sorties (803) pour former un nez (808) ;
un pont agencé dans le passage de carburant (802) et en amont du nez (808), le pont comprenant une pluralité de bras (811) s'étendant radialement à partir d'un centre (812, 116, 916) jusqu'à une paroi du passage de carburant, le centre (812, 116, 916) étant agencé dans un alignement axial avec un centre du nez (808).

2. Injecteur de carburant selon la revendication 1, comprenant en outre une seconde cavité annulaire (805) disposée autour de la première cavité annulaire 804 et définie par une paroi externe annulaire (806) s'étendant à partir de l'aval de l'extrémité de sortie jusqu'à une position en amont de la ou des sorties (803), la paroi externe annulaire (806) étant convergente au niveau d'une extrémité en aval ce qui permet de définir un orifice (807) centré concomitant de manière nominale avec l'axe allongé, la seconde cavité annulaire (805) présentant une entrée de seconde cavité annulaire au niveau d'une extrémité en amont et lesdites sorties (803) de passage de carburant débouchant au niveau d'une surface radialement externe de la paroi externe annulaire (806).

3. Injecteur de carburant selon la revendication 2, lesdites sorties (803) étant dirigées radialement vers l'extérieur et selon une direction en aval.

4. Injecteur de carburant selon la revendication 2 ou 3, lesdites sorties (803) étant inclinées selon une direction circonférentielle et/ou axiale.

5. Injecteur de carburant selon l'une quelconque des revendications précédentes, ledit nez s'étendant en aval des sorties de passage de carburant.

6. Injecteur de carburant selon l'une quelconque des revendications 2 à 5, ladite extrémité du nez (808) étant agencée légèrement en amont de l'orifice (807).

7. Injecteur de carburant selon l'une quelconque des revendications précédentes, ledit pont comprenant en outre une poutre de support (915) s'étendant à partir du centre (812, 116, 916) jusqu'à une position en amont où elle est fixée à une paroi du passage de carburant.

8. Injecteur de carburant selon l'une quelconque des revendications 1 à 6, lesdits bras (811) du pont convergeant vers un sommet au centre (812, 116, 916).

9. Injecteur de carburant selon l'une quelconque des revendications 1 à 7, lesdits bras (112) convergeant vers une partie plane au centre (812, 116, 916).

10. Injecteur de carburant selon l'une quelconque des revendications précédentes, un axe longitudinal des bras (112) étant incliné par rapport à la perpendiculaire à l'axe allongé du passage de carburant (102).

11. Injecteur de carburant selon la revendication 10, lesdits bras (112) étant incurvés pour former une structure de pont en forme de dôme.

12. Buse de pulvérisation de carburant comprenant une coupelle de turbulence à air annulaire et un injecteur de carburant selon l'une quelconque des revendications précédentes, ledit injecteur de carburant étant agencé de manière nominale au centre de la coupelle de turbulence à air annulaire (34) pour former la buse de pulvérisation de carburant.

13. Moteur à turbine à gaz comprenant une ou plusieurs buses de pulvérisation de carburant, les buses de pulvérisation de carburant possédant la configuration selon la revendication 12.

14. Moteur à turbine à gaz selon la revendication 13, comprenant une pluralité de buses de pulvérisation de carburant agencées en un réseau annulaire autour d'un axe de moteur du moteur à turbine à gaz.
